# EUROPEAN PATENT APPLICATION

(11) **EP 1 703 382 A1**
(43) Date of publication of application: **20.09.2006**
(21) Application number: 05005728.0
(22) Date of filing: 16.03.2005
(51) Int. Cl.: G06F 9/445

(54) **Method for loading applications to a mobile device**

(71) Applicant: SUN MICROSYSTEMS, INC., Santa Clara, California 95054 (US)
(72) Inventor: Hans, Sebastian, 14059 Berlin (DE)
(74) Representative: HOFFMANN EITLE

(57) **Abstract**

Application center and chip device for loading applications to a mobile device. The chip device obtains and provides a mobile identifier uniquely identifying the mobile device to the application center. At the application center, an application list manager detects an allotted application list, devised for the mobile device, and a loaded application list, actually loaded on the mobile device, based on the mobile identifier and identifies one or a group of applications of the allotted application list which are not yet loaded to the mobile device. The identified applications are then transferred to the mobile device for installation. A push-type loading of applications with or without user interaction is enabled.

## Description

### FIELD OF THE INVENTION

The present invention relates to an application center for loading an application to a mobile device and to a chip device of or insertable into the mobile device, for loading the application.

### BACKGROUND OF THE INVENTION

Wireless communication networks are becoming increasingly popular and are widely used for communications in private and business environments. Wireless networks allow a wireless transmission of information between users, e.g. during a telephone conversation between telephone terminals or a data communication between computing devices. Wireless networks generally operate according to some wireless communication standard, examples being the GSM (Global System for Mobile Communications) standard, the UMTS (Universal Mobile Telecommunications System) standard, or networks using the GSM/3G standard, the CDMA2000 (Code Division Multiple Access 2000) standard, wireless LAN standards and others.

Mobile communications networks constitute one type of wireless communication network that generally allows a user of a mobile device to at least roam within the coverage area of the serving network, and communications may be handed over between individual cells of the mobile network. Further, fixed wireless networks constitute another type of wireless communication network which generally only allows a movement of a wireless device within a smaller defined area, such as an office, home and similar.

A mobile telephone is one type of wireless communication device, widely used in voice and/or data communications. Similarly, a mobile computer is a type of wireless communication device which is able to couple to wireless communication networks for data transmission and/or assisting in voice communications with other communications or computing devices.

Mobile devices such as mobile telephones or mobile computing devices may include a card device or chip device, for enabling access to a wireless network or a plurality of different wireless networks. The chip device can be a type of plastic card embedded with a computer chip for storing data and for carrying out processing operations to enable the mobile device to access the network or networks. The chip device may store information pertaining to a particular user or subscriber of a network, allowing a network operator to identify the user for properly directing calls to the user, for providing features of subscribed services, for billing purposes and similar. The chip device may be insertable into the mobile device, into a dedicated slot or receiving compartment, or may form an integral part thereof. The chip device may for example be a smart card, e.g. as defined in the ISO 7816 standardization series.

Newer mobile devices may have substantial computing power and are thus becoming increasingly versatile and may not only offer simple communication services, e.g. voice communication services, but may offer also data services for virtually any type of application, e.g. information services, maintenance of personal information, purchasing transactions, banking services and similar.

Accordingly, the mobile devices will be required to hold a number of different mobile application programs, for operating the mobile device and for enabling service provision.

The application programs may be installed on a mobile control unit of the mobile device, or may be installed on the chip device. An application may be installed on the mobile device when the mobile device is put into service, e.g. during manufacturing the mobile device, when entering a service contract with a user, or similar. Further, applications may be installed on a chip device upon putting a chip device into service, including making a service contract with a user, upon manufacturing the chip device, or similar. Thus, the mobile device and the chip device will be equipped with a certain initial set of applications available for a user.

However, if at a later point in time during regular operation of the mobile device requirements change, or new services are subscribed to, an operator of the wireless network may want to install, remove or update applications available on the mobile control unit and/or the chip device.

It is conceivable to load applications onto the mobile control unit and/or chip device in a specific service mode entered by a user, where the wireless link between the network and the mobile device is used for downloading applications. However, this may require substantial user interaction in selecting applications, and controlling the downloading of applications, which may lead to errors. Further, as the network may not have full knowledge about applications or versions of applications available on the mobile device, applications may be loaded repeatedly or not at all.

### SUMMARY OF THE INVENTION

It is therefore desirable to determine applications to be loaded to a mobile device and to improve the loading process.

According to an embodiment of the invention, an application center for loading an application to a mobile device having a chip device comprises an application list manager for determining an allotted application list and a loaded application list associated with the mobile device based on a mobile identifier, and for identifying at least one application of the allotted application list which does not form part of the loaded application list, and further, the application center comprises an application loader for loading the at least one application to the mobile device. Accordingly, the application center may advantageously use information on applications allotted to or devised for the mobile device and applications already loaded to the mobile device, to schedule a loading of further applications to the mobile device. This avoids repeated loading operations of the same application and further avoids the necessity of user interactions for loading the applications.

In an example, the application list manager receives the mobile identifier from the chip device, the chip device having requested the mobile identifier from a mobile control unit of the mobile device during an initialization procedure. Thus, the mobile identifier can be transmitted through interactions with the chip device and an operator of the application center, which is particularly advantageous, if both the chip device and the application center are operated by or under control of the same entity, for example a network operator.

In addition to receiving the mobile identifier, in another example the application list manager receives a chip identifier from the chip device.

In another example, the application list manager establishes a secure data transmission path with the chip device, and to receive at least one of the mobile identifier and the chip identifier through the secure data transmission path.

According to another example, the application list manager identifies a type of the mobile device based on the mobile identifier, and determines at least part of the allotted application list based on the type of the mobile device. Further, the application list manager may receive the chip identifier from the chip device, and identify the type of the chip device based on the chip identifier, to determine at least part of the allotted application list based on the type of the chip device. Accordingly, the applications may not only depend on the mobile identifier and a type thereof, but may also depend on the chip identifier and a type of the chip device.

In another example the application list manager determines the allotted application list based on at least one of a location indicator of the mobile device, an identifier of a serving network, subscription information and user preferences.

Further, in another example the application list manager requests information on loaded applications, and may request this information upon detecting at least one of an absence of a loaded application list and a lapse of a predetermined period of time. Accordingly, the application list manager will always be aware of a currently loaded list of applications at the mobile device.

In another example the application list manager stores corresponding pairs of chip identifiers and mobile identifiers and requests from the mobile device information on loaded applications upon detecting a new chip identifier in association with the mobile identifier.

The allotted application list may include a group of at least one allotted mobile application for the mobile control unit and a group of at least one allotted chip application for the chip device. Similarly, the loaded application list may include a group of at least one loaded mobile application and a group of at least one loaded chip application. Accordingly, the application center can provide groups of applications for the chip device and/or a mobile control unit.

In another example the application loader transmits at least one application to at least one of the mobile control unit and the chip device. This may include transmitting an identifier of the at least one application to the mobile device, and instructing at least one of the mobile control unit and the chip device to load the application. Loading the application may then include transmitting an application code for installation of the application on at least one of the mobile control unit and the chip device. Thus, the application loader can effect a loading of applications to the mobile control unit and/or chip device.

Together with the application the application loader may transmit an instruction indicating whether to install the at least one application with or without requesting a user instruction. Accordingly, applications can be installed on the mobile device without user interaction or even user knowledge.

Alternatively or in addition thereto, in another example, the application loader identifies a list of applications of the allotted application list which does not form part of the loaded application list and transfers the list to the mobile device to enable a user selection. Thus, a user can control a downloading of applications.

In another example the application loader identifies and loads the at least one application based upon detecting at least one of a change of location of the mobile device, a handover between serving networks, a handover between cells of a serving network and a user request. Accordingly, upon changing a status or condition of the mobile device, newly applicable applications are loaded to the mobile device.

According to another embodiment of the invention, a method for loading an application to a mobile device having a chip device comprises obtaining a mobile identifier of the mobile device, determining an allotted application list and a loaded application list associated with a mobile device based on the mobile identifier, identifying at least one application of the allotted application list which does not form part of the loaded application list, and loading the at least one application to the mobile device.

According to another embodiment of the invention, a program has instructions to carry out the method of any of the above operations. Further, according to another example a computer readable medium is provided, in which a program is embodied, where the program is to make a data processing device or system execute the method of any of the above operations. A computer program product may comprise the computer readable medium.

According to another embodiment of the invention, a chip device for loading an application to a mobile device comprises an identification unit for obtaining a mobile identifier of the mobile device, and an application request unit for transmitting the mobile identifier to an application center and instructing the application center to determine an allotted application list and a loaded application list associated with the mobile device based on a mobile identifier, and to identify at least one application of the allotted application list which does not form part of the loaded application list, and to transmit the at least one application to the mobile device.

The identification unit may be adapted to request the mobile identifier from a mobile control unit of the mobile device during an initialization procedure.

According to another example, the identification unit obtains a chip identifier of the chip device.

According to another example, the identification unit establishes a secure data transmission path with an application list manager and to transmit at least one of the mobile identifier and the chip identifier through the secure data transmission path.

According to another example, the application request unit instructs the application list manager to identify a type of the mobile device based on the mobile identifier and to determine at least part of the allotted application list based on the type of the mobile device.

Further, in an example the application request unit transmits a chip identifier of the chip device, instructing the application list manager to identify a type of the chip device based on the chip identifier and to determine at least part of the allotted application list based on the type of the chip device.

According to another example, the application request unit receives a request for information on loaded applications, and to obtain the information on loaded applications and to transmit the information to the application center.

According to another example the identification unit compares the mobile identifier with a previously stored mobile identifier and to transmit at least one of the mobile identifier and the chip identifier to the application center.

According to another example the application request handler receives the at least one application and to install the at least one application on at least one of a mobile control unit and the chip device.

According to yet another example the application request handler receives an identifier of the at least one application and to retrieve a corresponding application code. Still further, the application request handler may receive an application code for installation on at least one of a mobile control unit and the chip device.

According to another example the identification unit transmits the mobile identifier to the application center upon detecting at least one of a change of location of the mobile device, a handover between serving networks, a handover between cells of a serving network, and a user request.

According to another example, the identification unit receives a capabilities message from a mobile control unit upon a boot process and to analyze the capabilities message to obtain the mobile identifier.

### BRIEF DESCRIPTION OF THE DRAWINGS

- Fig. 1: shows elements of a communication environment for loading an application to a mobile device according to an embodiment of the invention;
- Fig. 2: illustrates operations of a method for loading applications to a mobile device according to an embodiment of the invention, particularly illustrating operations at an application center and a mobile device;
- Fig. 3: illustrates operations of a method for loading applications to a mobile device according to an embodiment of the invention, particularly illustrating operations at an application center, a chip device and a mobile control unit;
- Fig. 4: illustrates operations of a method for loading applications to a mobile device according to another embodiment of the invention, particularly illustrating operations for determining an allotted application list;
- Fig. 5: illustrates operations of a method for loading applications to a mobile device according to another embodiment of the invention, particularly illustrating operations at an application center and a mobile device for updating applications loaded to the mobile device;
- Fig. 6: illustrates operations of a method for loading applications to a mobile device according to another embodiment of the invention, particularly outlining operations at an application center and mobile device for enabling a user selection of applications to be loaded;
- Fig. 7: illustrates operations of a method for loading applications to a mobile device according to another embodiment of the invention, particularly outlining operations for determining fulfillment of a load condition; and
- Fig. 8: illustrates elements of a communication environment according to another embodiment of the invention, particularly illustrating elements of an application center and a mobile device.

### DETAILED DESCRIPTION OF THE PREFERRED EMBODIMENTS

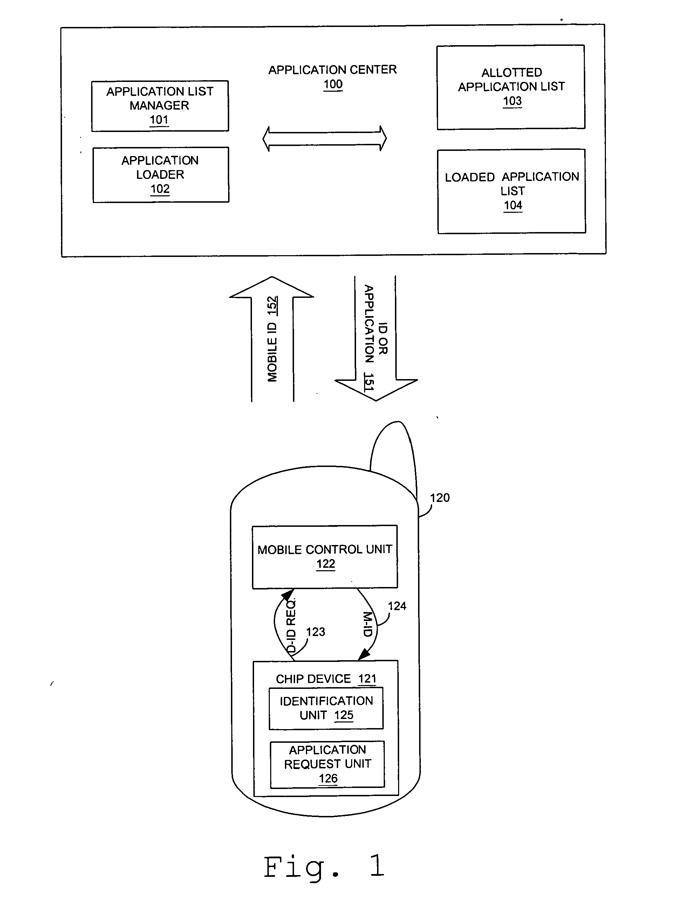

In the following a first embodiment of the invention will be described with regard to Fig. 1.

Fig. 1 illustrates elements of a communication environment for loading applications to a mobile device. The embodiment enables a convenient downloading of applications from the application center to the mobile device by maintaining information on applications loaded on the mobile device and applications allotted or devised for the mobile device. Based on a comparison of the applications already loaded on the mobile device and applications allotted for the mobile device the application center can determine additional applications to be downloaded to the mobile device. Thus, the application center may always ensure desired set on applications on the mobile device, without requiring extensive user interaction and by reducing a communication overhead.

Turning now in detail to Fig. 1, an application center 100 is shown to comprise an application list manager 101, an application loader 102, an allotted application list 103 and a loaded application list 104. Further, Fig. 1 illustrates a mobile device 120, comprising a chip device 121, e.g. removably attached to the mobile device 120 or forming an integral part thereof, and comprising a mobile control unit 122.

More precisely, the application list manager 101 of the application center determines an allotted application list and a loaded application list associated with the mobile device, based on a mobile identifier of the mobile device, and identifies at least one application of the allotted application list, which does not form part of the loaded application list. The application loader 102 of the application center then loads the at least one application to the mobile device.

Accordingly, the application center maintains a comprehensive overview on applications devised for and loaded to the mobile device 120, or a plurality of mobile devices. The application center will only load applications, including different versions thereof, to the mobile device, which are not already available at the mobile device.

In order to enable the application center to determine the allotted application list and the loaded application list 103 and 104, respectively, an identifier of the mobile device is transmitted to the application center, as illustrated at reference numeral 152 in Fig. 1. More precisely, the chip device 121 of the mobile device 120 comprises an identification unit 125 and an application request unit 126. The identification unit 125 obtains the mobile identifier of the mobile device, e.g. via a message from the mobile control unit, and the application request unit 126 transmits the mobile identifier to the application center, instructing the application center to determine the allotted application list and the loaded application list associated with the mobile device, based on the mobile identifier, and to identify at least one application of the allotted application list, which does not form part of the loaded application list, and to transmit the at least one identified application to the mobile device, as illustrated at 151.

In another example the identification unit obtains the mobile identifier from the mobile control unit 122 of the mobile device based on a request, as illustrated by reference numeral 123. For example, the request may be transmitted to the mobile control unit during an initialization or boot process of the mobile device, such as when the mobile device is switched on. The mobile control unit then returns the mobile identifier to the chip device as illustrated at reference numeral 124. The application request unit 126 can then proceed to transmit the mobile identifier to the application center, as noted before. Accordingly, in this example it is possible to transmit the identifier of the mobile device from the chip device to the application center, which is an advantage particularly if the chip device and the application center are owned by the same entity, e.g. an operator of a communication network serving the mobile device.

According to another example the identification unit 125 of the chip device not only obtains the identifier of the mobile device, but also obtains an identifier of the chip device itself, and transmits both identifiers to the application center.

The mobile identifier and/or the chip identifier may be transmitted via a secure data transmission path established between the chip device and the application center. A secure data transmission path can be established on the fly, i.e., for transmitting the identifier or identifiers, or an existing secure data transmission path between the chip device and the application center may be employed, e.g. using a secure data transmission path between the chip device and the mobile network. The secure data path between the chip device and the application center will, of course, make use of the transmitter and receiver of the mobile device, controlled by for example the mobile control unit 122, however, encryption or other means of the secure data path will prevent an unauthorized listening to information transmitted via the secure data path between the chip device and the application center.

The transmission of the mobile identifier and/or chip identifier triggers the determination of the allotted application list and the loaded application list at the application center, the identification of the at least one application of the allotted application list which does not form part of the loaded application list and a transmission of this at least one application to the mobile device.

As an alternative, the application request unit 126 generates and transmits a specific request to the application center, requesting the above operations of determining the at least one application and transmission of the at least one application to the mobile device.

According to another example, the at least one application determined at the application center is transmitted to the mobile device as a sequence of coded instructions for installation or implementation at the mobile device, i.e., an application program can be transmitted from the application center. Alternatively, the application transmitted from the application center to the mobile device may be constituted by an identifier of the application to be loaded at the mobile device, and the mobile device may use the identifier to obtain the corresponding coded instructions from another source. For example, the mobile device obtains the application code from a memory available at the mobile device, storing a set of applications in compressed form, or may obtain the application from an external device, e.g. arranged somewhere in a communication network.

According to another example, the application list manager receives the mobile identifier and identifies a type of the mobile device based on the mobile identifier and determines at least part of the allotted application list based on the type of the mobile device. Accordingly, the allotted application list may be specifically tailored to the mobile device, e.g. considering its capabilities, features, and similar.

Likewise, if the application list manager also receives the chip identifier from the chip device, the application list manager may identify a type of the chip device based on the chip identifier and determine at least part of the allotted application list based on the type of the chip device. Accordingly, the allotted application list may also specifically tailored to the type of the chip device, e.g. its capabilities, features and similar.

Accordingly, the application center is able to determine applications for loading to the mobile control unit, or for loading to the chip device.

According to another example, the application list manager determines the allotted application list based on a location indicator of the mobile device. Accordingly, the allotted application list can comprise a localized set of applications, e.g. providing location dependent applications or features thereof. Further, the application list manager may determine the allotted application list based on an identifier of a serving network, enabling provision of an allotted application list based on a type or features of a serving network, or based on an application selection desired by a network operator. Still further, the application list manager, in another example, determines the allotted application list based on subscription information. The subscription information may include a user subscription of services and associated applications, and/or a user subscription to specific features of services. So further, in another example the application list manager determines the allotted application list based on user preference, including user settings of the mobile device, user settings pertaining to service selection and similar.

According to another example, the application center determines the loaded application list based on information on previously loaded applications, e.g. maintained at the application center. Alternatively or addition thereto, the application list manager can request information on loaded applications from the mobile device and/or the chip device.

Still further, according to another example, the chip device transmits information on loaded applications in association with the mobile identifier and/or chip identifier.

The application center may also request information from the mobile device on loaded applications upon detecting the absence of a loaded application list at the application center, and/or a lapse of a predetermined period of time. Accordingly, the application center will always be aware of the presently loaded applications.

The application list manager may store corresponding pairs of chip identifiers and mobile identifiers received from the mobile device, and, the application list manager receives a new chip identifier or mobile identifier in association with a previously stored mobile identifier or chip identifier of a corresponding pair, the mobile device may be requested to provide information on loaded applications. Thus, if a chip device is exchanged, or inserted into a new mobile device, a list of loaded applications may automatically be determined.

As noted above, the applications may be provided for the chip device and/or for installation on the mobile control unit of the mobile device. Therefore, in an example the allotted application list includes a group of at least one allotted mobile application and a group of at least one allotted chip application. Similarly, in this case the loaded application list includes a group of at least one loaded mobile application and a group of at least one loaded chip application.

In the following examples of the application center and mobile device shown in Fig. 1 will be outlined in further detail. It is noted that the following constitutes examples only and should not be construed as limiting the application.

The application center is responsible for maintaining or obtaining information on allotted applications of a mobile device, and loaded applications of the mobile device. And further, the application center is responsible for selecting at least one of the applications of the allotted application list which are not already loaded on the mobile device, i.e., which do not form part of the loaded application list.

The application center may manage a plurality of mobile devices, e.g. subscribers of a particular network or subscribers to the application loading service of the application center. Accordingly, the center preferably is located on a network side of a network serving the mobile device or mobile devices and may form an integral part of a serving network, responsible for all mobile devices having subscribed to the network, or mobile devices being present in the mobile network. Alternatively, however, the application center may also be responsible for only part of a communication network or maybe responsible for a number of different communication networks.

Further, while the application center shown in Fig. 1 is formed by a single unit, as shown in Fig. 1, it is also possible that the application center consists of distributed elements, for example distributed over a network, e.g. in a backbone of a communication network.

The application center preferably maintains centralized information on an allotted application list and a loaded application list for each one of a number of mobile devices. Where the elements of the application center are distributed, there should exist only one master copy of an allotted application list and a loaded application list. However, it is possible that in a larger network environment copies of the master allotted application list and master loaded application list are taken and distributed over the network, with the copies being maintained in closer proximity to an actual location of the mobile device. For example, in a GSM system a master copy of the allotted application list and loaded application list may be stored in a home location register of the GSM network, whereas copies of the allotted application list and loaded application list may for example be maintained at a mobile switching center (MSC).

The allotted application list 103 shown in Fig. 1 preferably lists all applications devised for a particular mobile device and/or chip device. While it is possible that the allotted application list includes a program code for each application or, e.g. a source code or a compiled code, it is also possible that the allotted application list only includes identifiers of the respective application, with the program code pertaining to the application being stored at another location and being referenced through the identifier of the application. Further, the allotted application list may be stored as one unit for example in a memory of the application center, or portions of the allotted application list may be stored in a distributed fashion in different memories of the application center. In one example the group of applications pertaining to the chip device are stored at one location, and the group of applications pertaining to the mobile device, i.e., the mobile control unit, are stored at another location in the application center.

The loaded application list 104, similar to the allotted application list, may be stored at a central location, or in a distributed fashion, with parts or copies of the loaded application list being stored in closer proximity to a mobile device and preferably includes a list of identifiers of application which are already loaded to the mobile device, i.e. the chip device or the mobile control unit.

While it is possible that the allotted application list and the loaded application list are physically stored somewhere at the application center, in another example the allotted application list and/or the loaded application list are generated on the fly, e.g. upon detecting a command or request pertaining to loading an application to the mobile device.

The applications for the mobile device, i.e. for the mobile control unit and the chip device may be of any type, including any kind of service application or application for an operating system of the mobile control unit and/or the chip device. Thus, an application could provide certain functionality for the mobile device, such as to obtain or utilize a certain service provided through the mobile device. For example, an application may relate to e-mail services, to a maintenance program of personal data, such as addresses and similar, a banking application for enabling online banking, information services, e.g. news services, local traffic information, information on local events, and similar. Still further an application may pertain to an operating system of the mobile device, i.e. controlling the mobile control unit and/or the chip device. These applications may add certain basic functionality to the mobile device, such as the capability to securely transmit data, ability to utilize certain compression techniques, applications enabling the use of application programs and similar.

It is noted that the term application as used in this description may not only include different applications with different functionality, but also different versions of the same application. Thus, for example a version V1.1 of a particular service application can be considered to constitute a first application, while a version V1.2 of the same service application can be considered to constitute a second application. Accordingly, the application center may also be used for updating applications on a mobile device, e.g. upon releasing a newer version of an application already loaded to the mobile device.

As detailed above, the application list manager 101 of the application center is responsible for determining the allotted application list and the loaded application list associated with the mobile device based on the mobile identifier and/or the chip identifier, and to identify at least one application of the allotted application list which does not form part of the loaded application list.

The application loader 102 of the application center is responsible for loading the at least one determined application to the mobile device.

In an example, the application manager and the application loader, i.e., the functionality realized by the application manager and the application loader is implemented by executing code instructions of corresponding programs on a data processing device. The application list manager and the application loader may thus be realized by loading corresponding executable code sections from a memory into a processor and executing same. Further, while it is possible that the application list manager and the application loader may be implemented by the same processing device, it is also possible that a group of processing devices, co-located or remotely located from one another, implement the application list manager and application loader. Alternatively, the application list manager and/or the application loader may be at least partially realized by hardware elements.

Preferably, the application list manager enters communications with the mobile device, and/or the serving network, in order to determine the location of the mobile device, an identifier and/or characteristics of the serving network, subscription information of a user, user preferences, and a type of the mobile device and the chip device. The application loader can obtain this information by accessing corresponding registries of the serving communication network, registering a location of the mobile device, an identifier of the network, subscription information and user preferences. Alternatively, or in addition thereto, the application list manager transmits corresponding requests to a serving network and/or the mobile device, to obtain the above information.

The mobile device 102 of Fig. 1 is shown as a mobile telephone, but may instead also be any other kind of mobile communication device. For example, the mobile device may be a mobile computing device or similar, including a laptop computer, a PDA (personal digital assistant) etc.

The mobile device is able to enter a one- or bi-directional communication with a serving network and the application center, and may operate in accordance with any standard, such as according to the GSM (global system for mobile communication) standard, UMTS (universal mobile telecommunication standard), D-AMPS, or may operate according to a wireless LAN standard, 3G (third generation) or beyond 3G networks, or any standard for wireless communication with distributed medium access control. The mobile device may also be capable of implementing a plurality of standards or access technologies and thus may be able to communicate with wireless communication networks operating in accordance with different standards.

The mobile device maintains a communication link to the serving network, this communication link being used for voice or data services and used for communicating with the application center. However, it is also possible that the mobile device operates more than one RF connection to support communications with the serving network on the one hand and for communicating with the application center on the other hand.

Communications carried out by or using the mobile device 120 may involve voice communications and/or data communications, e.g. in a regular telephone call or in a data communication between two parties. Combined approaches are also conceivable.

The serving network (not illustrated in Fig. 1) may be constituted by any kind of wireless communication network operating according to any communication standard or combinations thereof, such as GSM, UMTS, D-AMPS, wireless LAN standard, 3G (third generation) or beyond 3G networks, as noted above.

In an example the mobile control unit 122 at the mobile device 120, includes a processing unit and a memory for storing data and/or coded instructions pertaining to applications. The mobile control unit is responsible for communicating with the chip device, and is responsible for operating the mobile device, i.e., to provide the functions of the mobile device, and integrates an operating system of the mobile device. Further, the mobile control unit is capable of receiving applications from the application center and to install the applications, e.g. in a memory of the mobile control unit. The functionality of the mobile control unit may be realized by coded instructions stored in a memory of the mobile control unit and loaded into a processing unit of the mobile control unit. Alternatively or in addition thereto, at least parts of the mobile control unit may be realized in hardware.

According to an example, the chip device 121 is a plastic card embedded with a computer chip for performing processing operations and for storing data, or any other kind of chip device having provided thereon a memory and a processing unit. The chip device may include a processing unit and a memory, the memory storing coded instructions of programs for realizing the identification unit 125 and coded instructions of a program or programs for realizing the request unit 126. These instructions can then be loaded into the processing unit, enabling the chip device to execute the functionality of the identification unit and the request unit.

The chip device may be constituted by any chip device for mobile devices, such as a SIM (subscriber identification module), a SIM/UICC (Universal Integrated Circuit Card) or a smart card or other kind of chip card. In a CDMA2000 enabled mobile an optional R-UIM (Removable User Identity Module) may be used.

According to an example, the chip device 121 may is a chip-card insertable into / removable from a dedicated slot or compartment of the mobile device connecting to terminals of the mobile device, an example being a SIM card of a mobile telephone.

Alternatively, the chip device forms an integral part of the mobile device, e.g. realized by making use of a processing element and memory of the mobile device or mobile control unit or realized as dedicated hardware element.

An operator of the application center, or a network operator may own the chip device, so that the chip device and the application center are under control of the same entity.

Generally, the chip device can also host a complex file system that stores private and other data associated with a user, accessed and handled by a plurality of application programs. Further, the chip device is controlled via an operating system, the operating system providing the basic functionalities of the chip device, similar to an operating system on a desktop computer, workstation and similar.
In an example, the chip device also serves for identifying the mobile device towards the serving network, includes subscription information for routing incoming telephone calls, for billing purposes and similar.

Preferably, the mobile device and the chip device are uniquely identifiable by identification codes, for example, the mobile device, more precisely the mobile control unit can be identified by an IMEI (International Mobile Equipment Identity).

Moreover, the chip device and the mobile control unit are able to exchange messages between one another, such as the request for the mobile identification, the response with the mobile identification or other messages. A tool kit, as known in the art, may provide the message exchange capability. Moreover, the chip device is able to issue messages to a backend system, e.g. via SMS (short messaging service) such as a serving network and/or the application center.

According to another example, the chip device reacts upon switching on the mobile device and then downloads a terminal profile containing information characterizing the mobile device. Alternatively, the mobile device carries out a boot process upon being switched on, part of this boot process being a reset operation of the chip device. Some initial information is then downloaded to the chip device, including the mobile identifier and information on capabilities of the terminal to the chip device. This information is then provided to the application center, in order to facilitate determining the allotted application list. Still further, the chip application may include a chip application reacting upon the message from the mobile control unit, to analyze the message of the mobile control unit, to identify the unique identifier of the mobile device and similar.

Still further, a processing unit of the chip device may compare the value of the mobile identifier of the mobile device with a previously stored mobile identifier, in order to determine whether the chip device was inserted into another mobile device. In case the chip device was inserted into another mobile device, the download operations of applications may be triggered, i.e., the mobile identifier and/or chip identifier may be transmitted to the application center, and loading of applications may be requested.

The chip device may use existing messages of a transport protocol to a serving network and/or the application center, to send the identifiers to the application center, thus requiring only minor changes to an existing communication protocol.

The term "loading an application" as used in this description may include any operation or sequence of operations for installing or making available an application on the mobile device, i.e. on the mobile control unit and/or the chip device. This includes compiling, downloading or storing coded instructions of an application on the chip device or mobile control unit, such that, upon execution, the functionality of the application can be realized and utilized. Further, the expression "loading applications" as used in this description may refer to the operation of transferring an application, e.g. from the application center towards the mobile device, i.e. loading does not necessarily also include installing the application at the mobile device.

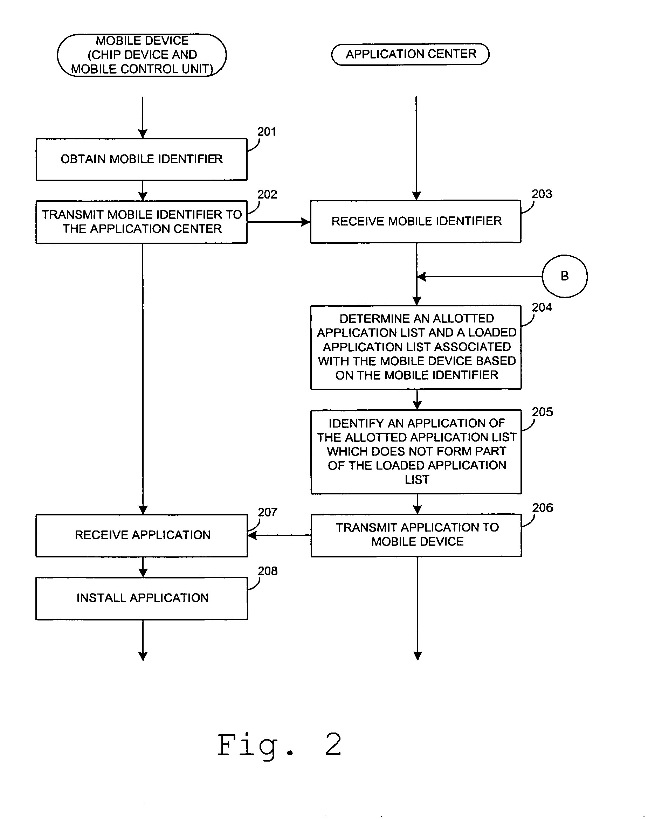

In the following a further embodiment of the invention will be described with regard to Fig. 2.

Fig. 2 illustrates operations of a method for loading applications to a mobile device, particularly illustrating operations at an application center and a mobile device. The operations of Fig. 2 may be carried out using the communication environment shown in Fig. 1, however, Fig. 2 is not limited thereto.

In a first operation 201 at the mobile device the mobile identifier uniquely identifying the mobile device is obtained. For example, the mobile identifier may be constituted by a mobile identifier also used by a serving communications network and may be stored in a permanent memory of the mobile device, such as in the mobile control unit 122 of the mobile device 120 shown in Fig. 1.

In an operation 202 the mobile identifier is transmitted from the mobile device to the application center, e.g. to the application center 122 shown in Fig. 1. The mobile identifier may be transmitted to the application center by making use of an existing communication link between the mobile device and a serving network, the serving network forwarding the mobile identifier to the application center. In an example the mobile identifier is included into a message of an existing communication protocol utilized by the mobile device to communicate with the serving network, e.g. for controlling the operation of the communication link, or may form part of payload data transmitted from the mobile device. The transmission of the mobile identifier to the application center may include any kind of transmission technique, such as any kind of wireless transmission, may include wire-bound transmissions, package-switched transmissions and so on.

In an operation 203 the mobile identifier is received at the application center, and a corresponding message or data packet is analyzed to determine the mobile identifier at the application center.

Thereafter, in an operation 204 an allotted application list and a loaded application list associated with the mobile device are determined based on the mobile identifier. For example, the application center stores for each mobile identifier an associated list of allotted applications and a list of loaded applications. The list of allotted applications may thus be tailored to an individual mobile device. Alternatively, or in addition thereto, a number of mobile identifiers of different mobile devices is associated with one allotted application list, e.g. a group of mobile devices having the same capabilities, type, and similar, or users having made the same subscription or having the same preferences.

The allotted application list may be permanently stored at the application center, or may be generated on demand, e.g. upon receiving a mobile identifier. In the first case the application center, using the mobile identifier, simply identifies a memory section in an application list store of the application center, holding the allotted application list. The same applies to the loaded application list. In the alternative, the allotted application list is generated upon receiving the mobile identifier, e.g. based on certain rules, such as a location of the mobile device, an identity of a user of the mobile device, a network and similar.

As noted before, the allotted application list may include coded instructions corresponding to the applications, or may include identifiers of the applications, which can later be used to retrieve coded instructions corresponding to the application from another location.

Similarly, the loaded application list may be permanently stored and updated, i.e., when an application is loaded to the mobile device, the corresponding application could be included into the loaded application list. Alternatively, the loaded application list is determined on demand, e.g. when receiving the mobile identifier. In this case the application center may interrogate the mobile device to learn about applications loaded at the mobile device. Moreover, the information on loaded applications may already be transmitted in association with the mobile identifier to the application center, i.e., in operation 202.

Once the allotted application list and the loaded application list of the mobile device is identified, in an operation 205 an application of the allotted application list is determined, when does not form part of the loaded application list. Operation 205, in one example, is a comparison of the contents of the allotted application list and the loaded application list, leading to a set of applications of the allotted application list which do not form part of the loaded application list, from which at least one of the applications is selected for loading to the mobile device.

Advantageously, determining the at least one application from the allotted application list which is not already loaded includes a selection operation. The selection operation may include randomly selecting a predetermined number of applications for loading to the mobile device, the predetermined number for example depending on an available time for loading applications, or an available bandwidth. According to an alternative, the selection step includes assigning priorities to applications, and loading the applications in the sequence of their priority. For example, applications of an operating system of the mobile device, assuring proper functioning of the mobile device, are assigned with the highest priority, and similarly, applications enabling services requested by a user may be assigned with a highest priority. Applications that are not needed for executing a presently requested service or applications that are not inevitable for operating the mobile device may be assigned with a lower priority. Here, a presently requested service may be a service requested by a user of the mobile device, e.g. an email service, and similar.

After identifying the application or applications to be loaded to the mobile device the loaded application list can be appropriately updated, by including references to the applications which are/will be loaded to the mobile device.

Thereafter, in an operation 206 the at least one application is transmitted to the mobile device. This may include transmitting an application code sequence to the mobile device, and/or transmitting an identifier of the application to the mobile device, as noted before.

In an operation 207 the application code or the application identifier is received at the mobile device. As noted before, the transmission of the application code or identifier may employ an existing communication link between the mobile device and the application center or a serving network, or may employ a dedicated communication link.

Thereafter, in an operation 208 the application is installed at the mobile device, e.g. by storing the application code in a memory of the mobile device, enabling a later loading of the code into a processing device of the mobile device for realizing the functionality of the application, as known in the art.

According to another example, the mobile device returns a completion indicator to the application center, indicating a successful loading of the application or the applications, in order to enable the application center to appropriately update the loaded application list.

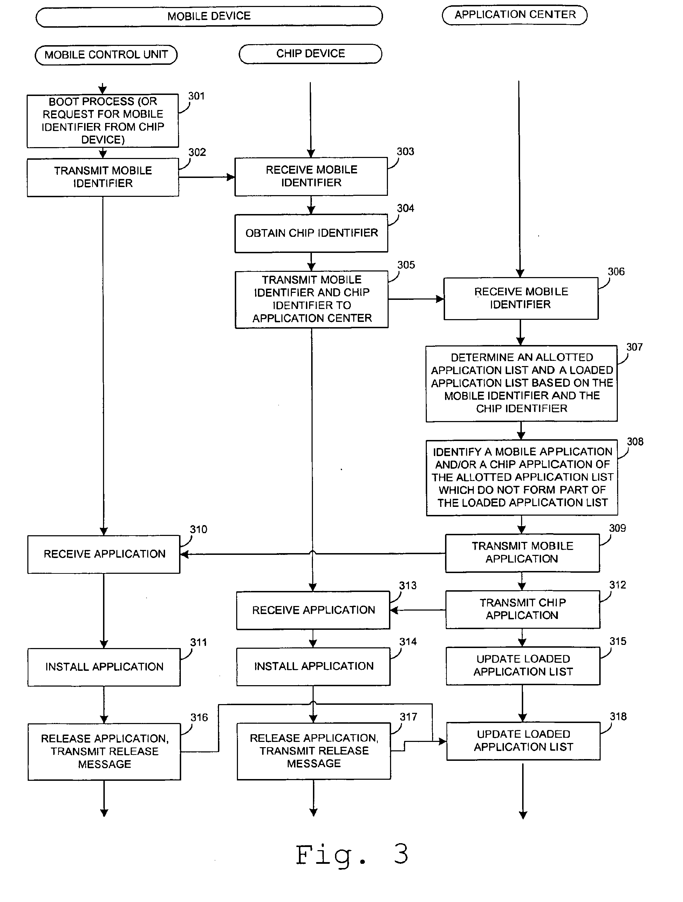

In the following a further embodiment of the invention will be described with regard to Fig. 3.

Fig. 3 illustrates operations of a method for loading an application to a mobile device, particularly illustrating operations carried out at an application center on the one hand, and on the other hand at a mobile device, including a mobile control unit and a chip device. The operations of Fig. 3 may be carried out using the communication environment of Fig. 1, however, Fig. 3 is not limited thereto.

In a first operation 301 a boot process is carried out at the mobile device, more precisely at the mobile control unit. For example, the boot process is carried out upon switching the mobile device into an ON condition, by operating a power button and/or entering a personal identification number of a user. During the boot process of the mobile device the mobile control unit may also initialize the chip device inserted into the mobile device such as the chip device 121 shown in Fig. 1.

During or after the boot process, in operation 302 the mobile control unit, such as the mobile control unit 122 of the mobile device 120 shown in Fig. 1, transmits the mobile identifier to the chip device. The mobile identifier may be transmitted in association with an initialization method exchange between the chip device and the mobile control unit.

In an operation 303 the chip device receives the mobile identifier. If the mobile identifier is included into messages in exchange between the mobile control and the chip device, an identification unit such as the identification unit 125 shown in Fig. 1 analyses the messages, in order to retrieve or determine the mobile identifier. In an alternative to operation 301 the chip device can also issue a specific request for the mobile identifier to the mobile control unit, e.g. during a boot process or at any other point in time.

In an operation 304 the chip device also obtains a chip identifier, in addition to the mobile identifier identifying the mobile device. Obtaining the chip identifier in an example includes performing a lookup operation in a permanent storage unit of the chip device storing the chip identifier. Preferably, the chip identifier and the mobile identifier uniquely identify the mobile device and the chip device towards the application center.

Thereafter, in an operation 305 the mobile identifier and the chip identifier are transmitted to the application center, such as the application center 100 shown in Fig. 1. While the identifier may be transmitted via a direct link to the application center, the identifier may also be transmitted through the mobile control unit. As noted before, the identifiers may be transmitted in accordance with existing messages of communication protocols supported by the mobile device/chip device and the application center.

In an example the transmission of the mobile identifier is carried out by making use of a secure data transmission path between the chip device and the application center, e.g. with or without involving the mobile control unit. The secure data transmission path between the chip device and the application center may make use of any kind of encryption technique. For example, a public/private key cryptography technique may be used to build the secure data transmission path. For example, the RSA algorithm may be used, providing a pair of keys, the public and private key. Either key can be used for encryption and respective decryption of information exchanged between the chip device and the application center. Initially, key pairs are generated, the private key is stored with the respective entity, and the public key is made known to third parties, including the respective other entity. For example, the public key of the chip device would be made known to the application center, and the public key of the application center would be made known to the chip device. Using the private and public keys, a secure communication can then be established, for transmitting the identifiers and/or loading the applications.

In an operation 306 the mobile identifier and the chip identifier are then received at the application center, and forwarded to an application list manager, such as the application list manager 101 shown in Fig. 1.

The application list manager determines in an operation 307 an allotted application list and a loaded application list based on the mobile identifier and the chip identifier. Generally, the identification operation may basically be as outlined with regard to the embodiment of Fig. 1 in connection with determining the allotted application list based on the mobile identifier, with the addition of using also the chip identifier for determining the allotted application list. For example, the allotted application list could be determined or retrieved for the combination of the chip identifier and mobile identifier received in operation 306.

Further, while the allotted application list can be permanently stored at the application center and updated from time to time, it is also possible that the allotted application list is generated upon receiving the mobile identifier and the chip identifier. In an example, the application list manager identifies a type of the chip device based on the chip identifier and identifies a type of the mobile device based on the mobile identifier. Then, the application list manager determines at least part of the allotted application list based on the type of the chip device, and at least part of the allotted application list based on the type of the mobile device. Consequently, the allotted application list may include a group of at least one allotted mobile applications and a group of at least one allotted chip applications.

In an example the allotted application list includes all applications devised by an operator of the application center and mobile device devised for the mobile device, e.g. for each specific combination of chip identifier and mobile identifier. In another example an operator may devise sets of applications for groups of mobile identifier chip identifier pairs, e.g. for mobile devices and chip devices having certain features or processing capabilities.

Further, in operation 307 the application list manager determines a loaded application list based on the mobile identifier and the chip identifier. The loaded application list may be determined as it was outlined with regard to previous embodiments. For example, a loaded application list can be maintained for each chip identifier and mobile identifier combination.

In operation 308 the application list manager identifies a mobile application and/or a chip application of the allotted application list, or a plurality of those applications, which do not form part of the loaded application list, as outlined with regard to previous embodiments.

In an operation 309 the at least one mobile application is transmitted to the mobile device, e.g. by the application loader 102 shown in Fig. 1 to the mobile control unit, such as the mobile control unit 122 of the mobile device 102 shown in Fig. 1. The mobile application can be transmitted as a sequence of coded instructions or as an identifier of the mobile application, as outlined before. The transmission to the mobile control unit may be effected by appropriately designating the mobile control unit as addressee of the mobile application.

The mobile application may be directly transmitted to the mobile control unit, through a communication link between the mobile device and a serving network, and the application center. In an alternative the mobile application is transmitted through the chip device, i.e., first routed through the receiver of the mobile device to the chip device and then distributed to the mobile control unit. In this case the transmission of the mobile application may utilize a secure data transmission link between the chip device and the application center.

In an operation 310 the at least one mobile application is received at the mobile control unit. In case of a transmission of only an identifier of the mobile applications the operation 310 may further include retrieving code instructions of the respective applications from another source. This may include identifying and decompression applications from an application library available at the mobile device or available at an external location, accessible by the mobile device.

In an operation 311 at the mobile control unit the application is installed, as detailed with regard to previous embodiments.

Similar to operation 309, in an operation 312 the at least one chip application is transmitted to the chip device which may utilize a secure data transmission link between the chip device and the application center. Alternatively, the chip application is not directly transmitted to the chip device, but first routed to the mobile device and the mobile control unit, where it is then distributed to the chip device.

In an operation 313 the at least one application is received at the chip device, where it is installed in an operation 314, similar to operation 311.

Subsequently, in an operation 315 at the application center, the loaded application list is appropriately updated, by including references to the installed at least one chip application and at least one mobile application. Operation 315 may simply include entering an identifier of the respective applications into the loaded application list, but may also include entering further information, such as a point in time of loading the application. Further, the loaded application list may include information on versions of the loaded applications, so that it can be identified whether an application at the mobile device needs to be updated.

Alternatively, the individual versions of an application may also be treated as separate applications, as noted before.

With the above operations applications have been installed or loaded to the mobile device, i.e. the chip device and/or the mobile control unit. However, it is also possible that applications need to be released from the chip device and the mobile control unit, in order to increase availability of memory space or if applications are not required any longer for other reasons, such as if a certain service is unsubscribed, if a service provision is terminated at the mobile device and similar.

Therefore, in an optional operation 316 a release message is transmitted from the mobile control unit to the application center, in case one of the applications is released from the mobile control unit. Similarly, a release message from the chip device is transmitted to the application center in an operation 317, if an application is released from the chip device, preferably, the released messages include an identifier of the respectively released applications. The messages may be transmitted along the same path as the identifiers, i.e., the released message of the mobile device may be routed through the chip device to the application list manager.

In an operation 318, upon receiving the released messages from the mobile control unit and/or chip device, the application center updates the loaded application list in an operation 318. The update operation preferably includes deleting an identifier of the respectively unloaded applications from the loaded application list.

The embodiment described with regard to Fig. 3 supports the application center in maintaining an always updated list of loaded applications at a mobile device and enables appropriately loading applications to the mobile device.

While the operations of Fig. 3 are shown in a particular sequence, this is an example only, other sequences of operations are conceivable.

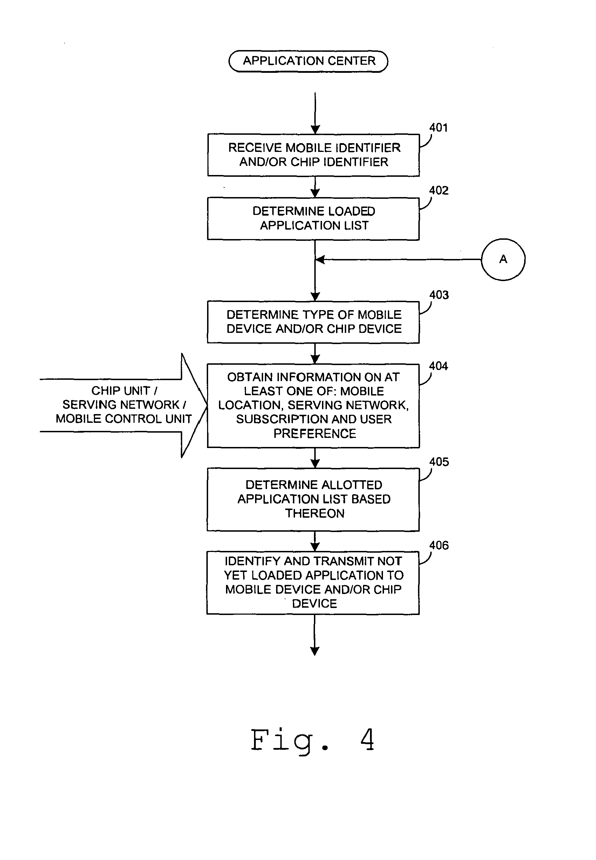

In the following a further embodiment of the invention will be described with regard to Fig. 4.

Fig. 4 illustrates operations of a method for loading applications to a mobile device, particularly illustrating operations to determine an allotted application list. The operation shown in Fig. 4 may be carried out using the communication environment shown in Fig. 1, however, Fig. 4 is not limited thereto.

In a first operation 401 a mobile identifier and/or a chip identifier is received at the application center, such as at the application list manager 101 of the application center 100 shown in Fig. 1. The transmission of the chip and/or mobile identifier may be as outlined with regard to previous embodiments and is not further described with regard to this embodiment.

Then, in an operation 402 a loaded application list is determined, e.g. as outlined with regard to previous embodiments.

Then, in an operation 403 a type of the mobile device and/or the chip device is determined, such as outlined before. In an example operation 403 includes determining a manufacturing code, a manufacturing date, capabilities and similar of the mobile device and/or chip device.

Obtaining information on the type of the mobile device and/or chip device enables selection of a tailored set of applications for the allotted application list.

In an operation 404 the application list manager then obtains information on a mobile location. The mobile location is a geographical location or region, where the mobile device is positioned. For example, the location of the mobile device may be determined by interrogating the network serving the mobile device. A location of the mobile device may correspond to a base station of the network serving the device, i.e. maintaining communications for a data exchange with the mobile device.

In another example a location of the mobile device is determined based on a geographical area served by the entire network, e.g. corresponding to a state or entire country. On the other hand, in another example the location of the mobile device corresponds to a region smaller than the coverage area of a base station, e.g. obtained by triangulation techniques, as known in the art. In another example, operation 404 includes obtaining information on a serving network, such as a network identification, a set of services provided by the network, a set of applications desired by a network operator and similar. Still further, operation 404 may include obtaining subscription information pertaining to a user subscription to services and/or features of services. For example, a subscription could identify an email service, and a subscription of a feature could identify a subscription to an automatic email notification service. Moreover, operation 404 may include determining user preferences, such as user settings of the mobile device, user setting for obtaining services and similar. For example, a user preference may pertain to a call forwarding service or settings thereof, to an automatic reminder service and similar.

The above information can be collected by the application center through inquiring at least one of the card devices, the mobile control unit or the serving network. Additionally, or in an alternative, the above information may be obtained by performing lookup operations in corresponding registries maintained at the application center and/or a serving network.

In an operation 405 then the application list manager determines an allotted application list based on the collected information. Consequently, the allotted application list may include a set of applications devised for mobile devices at a certain location. In an example, the list of set up applications includes applications for providing local information, local news, local traffic information, local information on services, such as train schedules, flight departures and similar. Further, a set of applications of the allotted application list may be defined in correspondence to a language associated with a location of the mobile device. Moreover, the allotted application list may include a set of applications associated with the serving network, such as applications pertaining to special services provided by the serving network, applications required for accessing the serving network and similar. Still further, the allotted application list may include sets of applications pertaining to a user subscription of services or features thereof, and/or user preferences, as noted above.

Thereafter, in an operation 406 the allotted application list and the loaded application list are compared, and applications of the allotted list not forming part of the loaded list are identified and transmitted to the mobile device and/or chip device. As noted above, priorities may be assigned to applications or groups of applications, and the applications or groups of applications may be transmitted in the order of prioritization.

In an example, an available timeframe for transmitting applications and/or an available amount of data for transmission is determined, and applications are selected for transmission in the order of their priority, until the data limit is reached.

The operations illustrated with regard to Fig. 4 enable a provision of a tailored allotted application list for a mobile device or a combination of mobile device and chip device.

While the operations shown in Fig. 4 are illustrated in a specific order, other sequences of the operations are conceivable, for example the operation 402 for determining a loaded application list could be carried out after operation 405 and before operation 406.

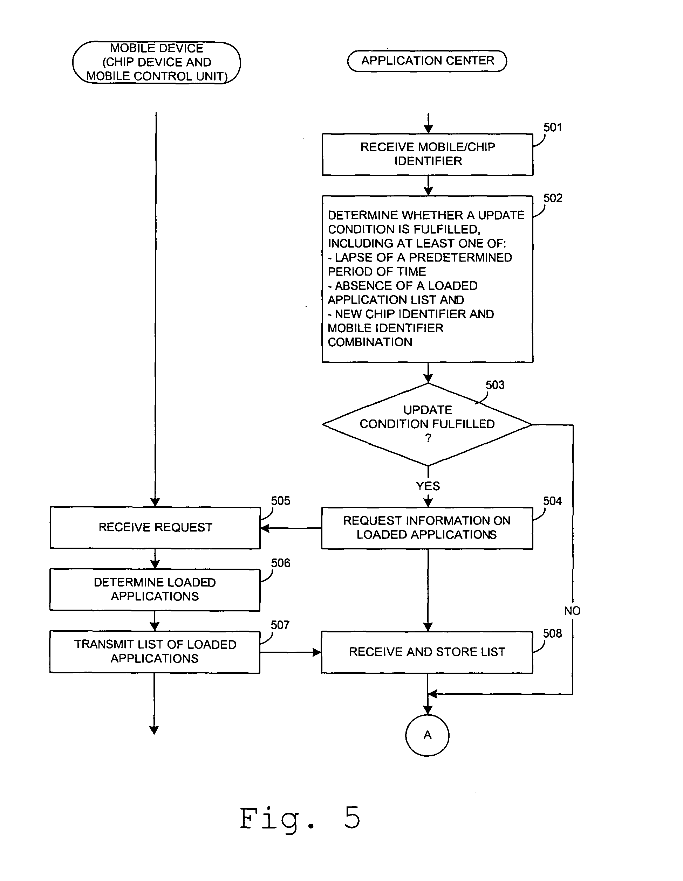

In the following a further embodiment of the invention will be described with regard to Fig. 5.

Fig. 5 illustrates operations of a method for loading applications to a mobile device, particularly illustrating operations for determining information on loaded applications at the mobile device. The operations of Fig. 5 may be carried out using the communication environment of Fig. 1, however, Fig. 5 is not limited thereto.

Fig. 5 enables the application center to obtain accurate information on applications actually loaded on the mobile device, for example in situations where the mobile device has been operated in a different environment, or has been used to load applications from a source different from the application center.

In a first operation 501 at the application center a mobile identifier of the mobile device is received, as detailed with regard to previous embodiments. Additionally, operation 501 may include receiving a chip identifier from a chip device, also as outlined before.

Thereafter, in an operation 502 it is determined whether an update condition is fulfilled, i.e., it is determined whether information on actually loaded applications on the mobile device should be collected.

According to a first example, an update condition is constituted by a lapse of a predetermined period of time. Thus, mobile devices may be regularly checked in view of applications loaded. The predetermined period of time could for example be a month, a week or any other period of time.

According to another example, update condition can be constituted by the absence of a loaded application list, i.e., an update condition is fulfilled, if the application center cannot identify a loaded application list corresponding to the mobile identifier and/or chip identifier.

According to still another embodiment, detection of a new chip identifier and mobile identifier combination is considered to constitute an update condition. Accordingly, each time a combination of a chip identifier and mobile identifier differs from a previously received combination of chip identifier and mobile identifier, information on loaded applications needs to be obtained. Receiving a new chip identifier a mobile identifier combination indicates that the chip device has been inserted into another mobile device.

Finally, according to still another example, information on loaded applications may be obtained each time the procedure is triggered, i.e. each time a mobile or chip identifier is received or the loading procedure for loading at least one application is triggered by any other event.

Thereafter, in an operation 503 it is determined whether an update condition is fulfilled. If in operation 503 the decision is "YES", indicating that one of the update conditions or a plurality thereof has been fulfilled, in an operation 405 a request for information on loaded applications is generated and transmitted to the mobile device, i.e. to the chip device and/or the mobile control unit.

The request for information on loaded applications may be transmitted directly to the mobile device, or via the secure data link between the application center and the chip device.

In an operation 505 the request is received at the mobile device, and in an operation 506 the mobile device, i.e. the chip device and/or the mobile control unit carry out operations to determine the actually loaded applications. Information on the loaded applications may be included into a list of identifiers of loaded applications, e.g. by reviewing a registry of applications loaded on the mobile device.

In an operation 507 the list of loaded applications is then transmitted to the application center. Preferably, the list of loaded applications includes at least an identifier of the loaded applications, and may include further information such as a time of loading the respective application, further information regarding the application, such as version of the application and similar.

In an operation 508 the list of loaded application is received at the application center and stored thereat.

In an alternative to operations 504-508 the application center may request the information on loaded applications from another source, for example from the communication network serving the mobile device, and/or from any other location.

After operation 508 the flow of operations may enter the flow of operations of Fig. 4 at an entry point A, i.e., the flow of operations may continue with determining an allotted application list of operation 403.

If in operation 503 the decision was "NO", indicating that none of the update conditions was fulfilled, the flow may directly proceed to the entry point A of Fig. 4.

Fig. 5 shows operations of an embodiment supporting the application center in maintaining an always up to date list of actually loaded applications of the mobile device.

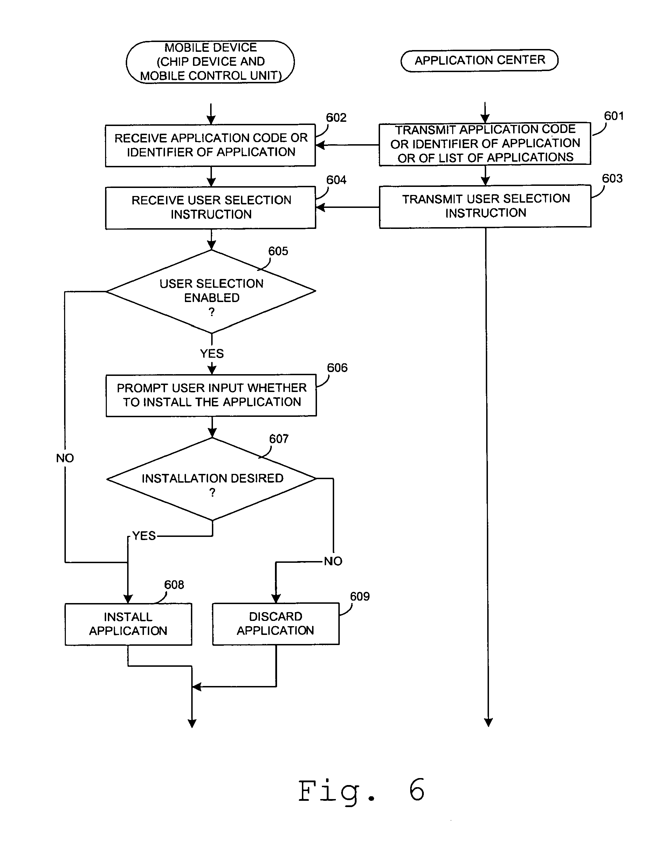

Following a further embodiment of the invention will be described with regard to Fig. 6.

Fig. 6 illustrates operations for loading applications to a mobile device, particularly illustrating operations at an application center and a mobile device. The operations of Fig. 6 may be carried out using the communication environment shown in Fig. 1, however, Fig. 6 is not limited thereto.

Fig. 6 particularly outlines options for invoking or avoiding user interactions in the loading process of operations to the mobile device. Fig. 6 illustrates operations of a push-type loading of applications to the mobile device, e.g., the unsolicited loading of applications to the mobile device or a push-type service including a user interaction.

In a first operation 601 an application code or identifier of an application or of a list of applications is transmitted from the application center to the mobile device, such as from the application center 100 to the mobile device 120 of Fig. 1, as outlined with regard to previous embodiments.

In an operation 602 the application code or identifier of the application or applications is received at the mobile device, also as outlined before.

Further, in an operation 603 the application center generates and transmits a user selection instruction to the mobile device. The user selection instruction includes an identification, whether a user shall be involved in the operation of selecting and/or loading applications to the mobile device.

In one example the user selection instruction is constituted by a simple flag, which, when set, indicates that a user should be involved in selecting the applications to be actually loaded to the mobile device.

In a more elaborate case, the selection instruction includes an indication for individual applications or groups of applications, indicating whether the user should be involved in deciding on loading the respective applications. In this case for example each application or a group of applications could be associated with a user selection instruction flag, which, when set, enables a user interaction when loading the application. The user selection instruction is transmitted to the mobile device, where it is received in an operation 604. The transmission of the user selection instruction may be in physical association with the transmission of operation 601, i.e., the user selection instruction can be transmitted together with the application code or identifiers of the applications or list of applications. However, it is also possible that the user selection instruction is only logically associated with the transmission of operation 601, i.e., the user selection instruction may be transmitted at a later point in time.

After receiving the user selection instruction, in an operation 605 it is determined whether a user selection is enabled. For example, in the above examples it is determined whether user selection flags are set or not set. In an operation 605 the determination is "YES", indicating that a user selection is enabled for a present application or group of applications, in an operation 606 a user of the mobile device is prompted to input a command whether to install the application or refrain from installing the application. The user prompt may be displayed on a display unit associated with the mobile device, e.g. on a display screen of a mobile telephone or mobile computing device. A user may make a selection by pressing a predetermined key or sequence of predetermined keys.

If in operations 607 it is determined that an installation of the application or applications is desired. If in operation 607 the decision is "YES", indicating that an installation of the application or applications is desired, in an operation 608 the application or applications are actually installed, as detailed before.

If in operation 607 the decision is "NO", indicating that an installation is not desired by the user, in an operation 609 the respective application or applications are discarded.

If in operation 605 the decision was "NO", indicating that a user selection was not enabled, the flow of operations directly proceeds to operation 608, and the application or applications are installed without involving a user. In this case the loading of applications may take place without even informing the user.

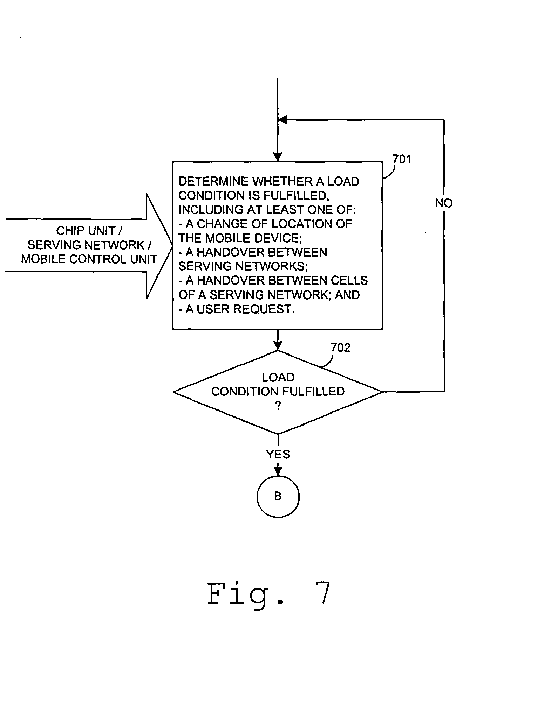

In the following a further embodiment of the invention will be described with regard to Fig. 7.

Fig. 7 illustrates operations of a method for loading applications to a mobile device, particularly illustrating operations for determining fulfillment of a load condition. Here, load condition is a condition indicating that the loading of additional applications or the replacement or update of applications is required. The operations of Fig. 7 may be carried out entirely at the application center, or may involve at least one of the application center and the mobile device.

In a first operation 701 it is determined whether a load condition is fulfilled. According to a first example, a load condition is constituted by a change of location of the mobile device. For example, if the mobile device changes its location, in a localized set of applications may be required at the mobile device, as detailed before. A change of a location of the mobile device may be determined as it was for example outlined with regard to operation 404 of Fig. 4.

According to another example, a load condition is constituted by carrying out a handover between serving networks. A handover between serving networks may require a downloading of a different set of applications to the mobile device, e.g. a list of applications required for accessing the mobile device, a list of applications devised for the mobile device when served by the new network, and similar, as outlined above.

According to another example, a load condition is a handover between cells of a serving network. Finally, according to another example, an update condition is constituted by a specific user request to load further applications to the mobile device. A user of the mobile device may for example enter the user request by pressing a certain key or combination of keys at the mobile device.

According to another example, a load condition may also be constituted by the fact that new applications or sets of applications become available or are newly supported by the application center or a serving network.

The information acquired in operation 701 may be obtained by the application center through requesting the chip device, the mobile control unit and/or the serving network, also as outlined with regard to operation 404 of Fig. 4.

In an operation 702 it is then determined whether a load condition is fulfilled. If in operation 702 the decision is "YES", indicating that at least one load condition is fulfilled, the flow of operations continues at an entry point B in Fig. 2, i.e., the flow of operations continues with operation 204 the determining of an allotted application list and a loaded application list.

If in operation 702 the decision is "NO", indicating that none of the load conditions is fulfilled, the flow returns to operation 701, i.e., it is waited until one of the load conditions is fulfilled.

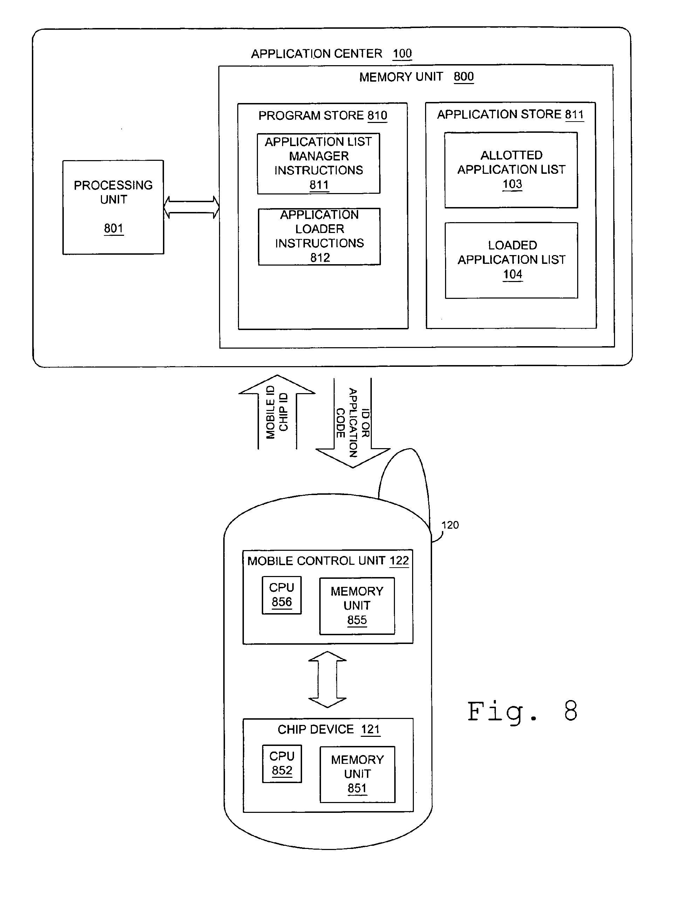

In the following a further embodiment of the invention will be described with regard to Fig. 8.

Fig. 8 illustrates elements of a communication environment for loading applications to a mobile device. Fig. 8 is similar to Fig. 1, showing more detail of the application center and the mobile device.

Elements corresponding to those in Fig. 1 are denoted by the same reference numerals and are not further described in this embodiment.

Fig. 8 illustrates an application center 100 including a memory unit 800. The memory unit is subdivided into a program store 810, and an application store 811.

The program store and the application store may occupy different portions of the memory unit, or may be arranged in physically separate elements of the memory unit. The memory unit may be any kind of memory unit, such as a RAM, a hard disk, optical storage means or combinations thereof.

Further, while the memory unit is shown located at the application center, it is also possible that at least portions thereof are located external to the application center.

The application store 811 stores the allotted application list 103 and the loaded application list 104, as outlined with regard to previous embodiments.

Further, the program store stores application list manager instructions, denoted at 811, and application loader instructions, denoted at reference numeral 812. The application list manager instructions and the application loader instructions are constituted by sequences of software instructions which, when loaded into a processing device, make the processing device realize the functionality of the application list manager 101 and the application loader 102 described with regard to Fig. 1 and the other embodiments of the invention.

The application center further includes a processing unit 801 for loading the application list manager instructions and the application loader instructions, to execute their functionality for loading applications to mobile device. The processing unit 801 may be constituted by a single unit, or may be constituted by a plurality of interacting processing elements. The processing unit 801 and the memory unit 800 communicate, as indicated at 830, for example via a system bus, or via communication links between external elements of the processing unit and/or the application center.

Fig. 8 illustrates the mobile device 120, including the mobile control unit 122 and the chip device 121, as detailed before.

The chip device 121 includes a memory unit 851, the memory unit including identification unit instructions 853 and request unit instructions 854. The identification unit instructions 853 and the request unit instructions 854 are constituted by software instructions which, when loaded into a processing unit, make the processing unit to realize the functionality of the identification unit 125 and the request unit 126, respectively. Further, the chip device includes a central processing unit 852 for correspondingly loading the identification unit instructions and request unit instructions and executing same. Further, the memory unit is provided for storing further programs and/or data of the chip device, and the processing unit 852 realizes further functionality of the chip device.

Still further, the mobile device includes the mobile control unit 122, the mobile control unit having a central processing unit 856 and a memory unit 855. The memory unit 855 is provided for storing program instructions to realize, together with the central processing unit 856, the functionality of the mobile control unit as outlined with regard to the previous embodiments, and for realizing further operations of the mobile device.

It is noted that a program or programs may be provided having instructions adapted to cause a processing unit or a network of data processing units to realize elements of the above embodiments and to carry out the method of at least one of the above operations. Further, a computer readable medium may be provided, in which a program is embodied, where the program is to make a computer execute the method or the above operations.

Also, a computer-readable medium may be provided having a program embodied thereon, where the program is to make a chip device to execute functions or operations of the features and elements of the above described examples. A computer-readable medium can be a magnetic or optical or other tangible medium on which a program is recorded, but can also be a signal, e.g. analog or digital, electronic, magnetic or optical, in which the program is embodied for transmission. Further, a data structure or a data stream may be provided including instructions to cause data processing means to carry out the above operations. The data stream or the data structure may constitute the computer-readable medium. Still further, a computer program product may be provided comprising the computer-readable medium.

According to another embodiment an application center for loading applications to a mobile device having a chip device has the following elements.
1) Application center for loading applications to a mobile device having a chip device, comprising a processing unit and a memory for storing:
   a code section containing instructions to determine an allotted application list and a loaded application list associated with the mobile device based on a mobile identifier and for identifying at least one application of the allotted application list which does not form part of the loaded application list; and
   a code section containing instructions to load the at least one application to the mobile device.
2) Application center of 1), including a code section containing instructions to receive the mobile identifier from the chip device, the chip device having requested the mobile identifier from a mobile control unit of the mobile device during an initialization procedure.
3) Application center of 1), including a code section containing instructions to receive a chip identifier from the chip device.
4) Application center of 1) including a code section containing instructions to establish a secure data transmission path with the chip device and to receive at least one of the mobile identifier and the chip identifier through the secure data transmission path.
5) Application center of 1), including a code section containing instructions to identify a type of the mobile device based on the mobile identifier and to determine at least part of the allotted application list based on the type of the mobile device.
6) Application center of 1), including a code section containing instructions to further receive a chip identifier from the chip device, to identify a type of the chip device based on the chip identifier and to determine at least part of the allotted application list based on the type of the chip device.
7) Application center of 1), wherein the application list manager is adapted to determine the allotted application list based on at least one of:
   - a location indicator of the mobile device;
   - an identifier of a serving network;
   - subscription information; and
   - user preferences.
8) Application center of 1), including a code section containing instructions to request information on loaded applications.
9) Application center of 1), including a code section containing instructions to request from the mobile device information on loaded applications upon detecting at least one of:
   - an absence of a loaded application list; and
   - a lapse of a predetermined period of time.
10) Application center of 1), including a code section containing instructions to store corresponding pairs of chip identifiers and mobile identifiers and to request from the mobile device information on loaded applications upon detecting a new chip identifier in association with the mobile identifier.
11) Application center of 1), including a code section containing instructions to transmit the at least one application to at least one of a mobile control unit and the chip device.
12) Application center of 1), including a code section containing instructions to transmit an identifier of the at least one application to the mobile device, instructing at least one of a mobile control unit and the chip device to load the application.
13) Application center of 1), including a code section containing instructions to transmit an application code for installation of the application on at least one of a mobile control unit and the chip device.
14) Application center of 1), including a code section containing instructions to transmit in association with the application an instruction indicating whether to install the at least one application with our without requesting a user instruction.
15) Application center of 1) including a code section containing instructions to identify a list of applications of the allotted application list which does not form part of the loaded application list and wherein the application loader is adapted to transfer the list to the mobile device to enable a user selection.
16) Application center of 1), including a code section containing instructions to identify and load the at least one application based upon detecting at least one of:
   - a change of location of the mobile device;
   - a handover between serving networks;
   - a handover between cells of a serving network; and
   - a user request.
   According to another embodiment a chip device for loading applications to a mobile device has the following elements.
17) Chip device for loading applications to a mobile device, comprising:
   a code section containing instructions to obtain a mobile identifier of the mobile device and
   a code section containing instructions to transmit the mobile identifier to an application center, instructing the application center to determine an allotted application list and a loaded application list associated with the mobile device based on a mobile identifier and to identify at least one application of the allotted application list which does not form part of the loaded application list, and to transmit the at least one application to the mobile device.
18) Chip device of 17), including a code section containing instructions to request the mobile identifier from a mobile control unit of the mobile device during an initialization procedure.
19) Chip device of 17), including a code section containing instructions to obtain a chip identifier of the chip device.
20) Chip device of 17), including a code section containing instructions to establish a secure data transmission path with an application list manager and to transmit at least one of the mobile identifier and the chip identifier through the secure data transmission path.
21) Chip device of 17), including a code section containing instructions to instruct the application list manager to identify a type of the mobile device based on the mobile identifier and to determine at least part of the allotted application list based on the type of the mobile device.
22) Chip device of 17), including a code section containing instructions to transmit a chip identifier of the chip device, instructing the application list manager to identify a type of the chip device based on the chip identifier and to determine at least part of the allotted application list based on the type of the chip device.
23) Chip device of 17), including a code section containing instructions to receive a request for information on loaded applications, to obtain the information on loaded applications and to transmit the information to the application center.
24) Chip device of 17), including a code section containing instructions to compare the mobile identifier with a previously stored mobile identifier and to transmit at least one of the mobile identifier and the chip identifier to the application center.
25) Chip device of 17), including a code section containing instructions to receive the at least one application and to install the at least one application on at least one of a mobile control unit and the chip device.
26) Chip device of 17), including a code section containing instructions to receive an identifier of the at least one application and to retrieve a corresponding application code. 27. Chip device of 17), including a code section containing instructions to receive an application code for installation on at least one of a mobile control unit and the chip device.
28) Chip device of 17), including a code section containing instructions to transmit the mobile identifier to the application center upon detecting at least one of:
   - a change of location of the mobile device;
   - a handover between serving networks;
   - a handover between cells of a serving network; and
   - a user request.
29) Chip device of 17), including a code section containing instructions to receive a capabilities message from a mobile control unit upon a boot process and to analyze the capabilities message to obtain the mobile identifier.

## Claims

1. Application center for loading applications to a mobile device having a chip device, comprising:
an application list manager for determining an allotted application list and a loaded application list associated with the mobile device based on a mobile identifier and for identifying at least one application of the allotted application list which does not form part of the loaded application list; and
an application loader for loading the at least one application to the mobile device.

2. Application center of claim 1, wherein the application list manager is adapted to receive the mobile identifier from the chip device, the chip device having requested the mobile identifier from a mobile control unit of the mobile device during an initialization procedure.

3. Application center of at least one of the preceding claims, wherein the application list manager is adapted to further receive a chip identifier from the chip device.

4. Application center of at least one of the preceding claims, wherein the application list manager is adapted to establish a secure data transmission path with the chip device and to receive at least one of the mobile identifier and the chip identifier through the secure data transmission path.

5. Application center of at least one of the preceding claims, wherein the application list manager is adapted to identify a type of the mobile device based on the mobile identifier and to determine at least part of the allotted application list based on the type of the mobile device.

6. Application center of at least one of the preceding claims, wherein the application list manager is adapted to further receive a chip identifier from the chip device, to identify a type of the chip device based on the chip identifier and to determine at least part of the allotted application list based on the type of the chip device.

7. Application center of at least one of the preceding claims, wherein the application list manager is adapted to determine the allotted application list based on at least one of:
- a location indicator of the mobile device;
- an identifier of a serving network;
- subscription information; and
- user preferences.

8. Application center of at least one of the preceding claims, wherein the application list manager is adapted to request information on loaded applications.

9. Application center of at least one of the preceding claims, wherein the application list manager is adapted to request from the mobile device information on loaded applications upon detecting at least one of:
- an absence of a loaded application list; and
- a lapse of a predetermined period of time.

10. Application center of at least one of the preceding claims, wherein the application list manager is adapted to store corresponding pairs of chip identifiers and mobile identifiers and to request from the mobile device information on loaded applications upon detecting a new chip identifier in association with the mobile identifier.

11. Application center of at least one of the preceding claims, wherein the allotted application list includes a group of at least one allotted mobile application and a group of at least one allotted chip application.

12. Application center of at least one of the preceding claims, wherein the loaded application list includes a group of at least one loaded mobile application and a group of at least one loaded chip application.

13. Application center of at least one of the preceding claims, wherein the application loader is adapted to transmit the at least one application to at least one of a mobile control unit and the chip device.

14. Application center of at least one of the preceding claims, wherein the application loader is adapted to transmit an identifier of the at least one application to the mobile device, instructing at least one of a mobile control unit and the chip device to load the application.

15. Application center of at least one of the preceding claims, wherein the application loader is adapted to transmit an application code for installation of the application on at least one of a mobile control unit and the chip device.

16. Application center of at least one of the preceding claims, wherein the application loader is adapted to transmit in association with the application an instruction indicating whether to install the at least one application with our without requesting a user instruction.

17. Application center of at least one of the preceding claims, wherein the application loader is adapted to identify a list of applications of the allotted application list which does not form part of the loaded application list and wherein the application loader is adapted to transfer the list to the mobile device to enable a user selection.

18. Application center of at least one of the preceding claims, wherein the application loader is adapted to identify and load the at least one application based upon detecting at least one of:
- a change of location of the mobile device;
- a handover between serving networks;
- a handover between cells of a serving network; and
- a user request.

19. Method for loading applications to a mobile device having a chip device, comprising:
obtaining a mobile identifier of the mobile device;
determining an allotted application list and a loaded application list associated with the mobile device based on the mobile identifier;
identifying at least one application of the allotted application list which does not form part of the loaded application list; and
loading the at least one application to the mobile device.

20. A program having instructions adapted to carry out the method of claim 19.

21. A computer readable medium, in which a program is embodied, wherein the program is to make data processing device or system execute the method of claim 19.

22. A computer program product comprising the computer readable medium of claim 21.

23. Chip device for loading applications to a mobile device, comprising:
an identification unit for obtaining a mobile identifier of the mobile device and
an application request unit for transmitting the mobile identifier to an application center and instructing the application center to determine an allotted application list and a loaded application list associated with the mobile device based on a mobile identifier and to identify at least one application of the allotted application list which does not form part of the loaded application list, and to transmit the at least one application to the mobile device.

24. Chip device of claim 23, wherein the identification unit is adapted to request the mobile identifier from a mobile control unit of the mobile device during an initialization procedure.

25. Chip device of at least one of the claims 23 to 28, wherein the application request unit is adapted to receive a request for information on loaded applications, to obtain the information on loaded applications and to transmit the information to the application center.

26. Chip device of at least one of the claims 23 to 29, wherein the identification unit is adapted to compare the mobile identifier with a previously stored mobile identifier and to transmit at least one of the mobile identifier and the chip identifier to the application center.

27. Chip device of at least one of the claims 23 to 30, wherein the application request unit is adapted to receive the at least one application and to install the at least one application on at least one of a mobile control unit and the chip device.

28. Chip device of at least one of the claims 23 to 31, wherein the application request unit is adapted to receive an identifier of the at least one application and to retrieve a corresponding application code.

29. Chip device of at least one of the claims 23 to 32, wherein the application request unit is adapted to receive an application code for installation on at least one of a mobile control unit and the chip device.

30. Chip device of at least one of the claims 23 to 33, wherein the identification unit is adapted to transmit the mobile identifier to the application center upon detecting at least one of:
- a change of location of the mobile device;
- a handover between serving networks;
- a handover between cells of a serving network; and
- a user request.

31. Chip device of at least one of the claims 23 to 34, wherein the identification unit is adapted to receive a capabilities message from a mobile control unit upon a boot process and to analyze the capabilities message to obtain the mobile identifier.

## Amended claims

### Amended claims in accordance with Rule 86(2) EPC.

**1.** Application center for loading applications to a mobile device having a chip device, comprising:
application list manager means for determining an allotted application list and a loaded application list associated with the mobile device based on a mobile identifier and for identifying at least one application of the allotted application list which does not form part of the loaded application list; and
application loader means for loading the at least one application to the mobile device.

**2.** Application center of claim 1, wherein the application list manager means is adapted to receive the mobile identifier from the chip device, the chip device having requested the mobile identifier from a mobile control unit of the mobile device during an initialization procedure.

**3.** Application center of at least one of the preceding claims, wherein the application list manager means is adapted to further receive a chip identifier from the chip device.

**4.** Application center of at least one of the preceding claims, wherein the application list manager means is adapted to establish a secure data transmission path with the chip device and to receive at least one of the mobile identifier and the chip identifier through the secure data transmission path.

**5.** Application center of at least one of the preceding claims, wherein the application list manager means is adapted to identify a type of the mobile device based on the mobile identifier and to determine at least part of the allotted application list based on the type of the mobile device.

**6.** Application center of at least one of the preceding claims, wherein the application list manager means is adapted to further receive a chip identifier from the chip device, to identify a type of the chip device based on the chip identifier and to determine at least part of the allotted application list based on the type of the chip device.

**7.** Application center of at least one of the preceding claims, wherein the application list manager means is adapted to determine the allotted application list based on at least one of:
- a location indicator of the mobile device;
- an identifier of a serving network;
- subscription information; and
- user preferences.

**8.** Application center of at least one of the preceding claims, wherein the application list manager means is adapted to request information on loaded applications.

**9.** Application center of at least one of the preceding claims, wherein the application list manager means is adapted to request from the mobile device information on loaded applications upon detecting at least one of:
- an absence of a loaded application list; and
- a lapse of a predetermined period of time.

**10.** Application center of at least one of the preceding claims, wherein the application list manager means is adapted to store corresponding pairs of chip identifiers and mobile identifiers and to request from the mobile device information on loaded applications upon detecting a new chip identifier in association with the mobile identifier.

**11.** Application center of at least one of the preceding claims, wherein the allotted application list includes a group of at least one allotted mobile application and a group of at least one allotted chip application, a mobile application constituting an application for the mobile device and a chip application constituting an application for the chip device.

**12.** Application center of at least one of the preceding claims, wherein the loaded application list includes a group of at least one loaded mobile application and a group of at least one loaded chip application, a mobile application constituting an application for the mobile device and a chip application constituting an application for the chip device.

**13.** Application center of at least one of the preceding claims, wherein the application loader means is adapted to transmit the at least one application to at least one of a mobile control unit and the chip device.

**14.** Application center of at least one of the preceding claims, wherein the application loader means is adapted to transmit an identifier of the at least one application to the mobile device, instructing at least one of a mobile control unit and the chip device to load the application.

**15.** Application center of at least one of the preceding claims, wherein the application loader means is adapted to transmit an application code for installation of the application on at least one of a mobile control unit and the chip device.

**16.** Application center of at least one of the preceding claims, wherein the application loader means is adapted to transmit in association with the application an instruction indicating whether to install the at least one application with our without requesting a user instruction.

**17.** Application center of at least one of the preceding claims, wherein the application loader means is adapted to identify a list of applications of the allotted application list which does not form part of the loaded application list and wherein the application loader means is adapted to transfer the list to the mobile device to enable a user selection.

**18.** Application center of at least one of the preceding claims, wherein the application loader means is adapted to identify and load the at least one application based upon detecting at least one of:
- a change of location of the mobile device;
- a handover between serving networks;
- a handover between cells of a serving network; and
- a user request.

**19.** Method for loading applications to a mobile device having a chip device, comprising:
obtaining a mobile identifier of the mobile device;
determining an allotted application list and a loaded application list associated with the mobile device based on the mobile identifier;
identifying at least one application of the allotted application list which does not form part of the loaded application list; and
loading the at least one application to the mobile device.

**20.** A program having instructions adapted to carry out the method of claim 19.

**21.** A computer readable medium storing computer executable instructions that when executed on a computer workstation perform the method steps defined in method claim 19.

**22.** A computer program product comprising the computer readable medium of claim 21.

**23.** Chip device for loading applications to a mobile device, comprising:
an identification unit for obtaining a mobile identifier of the mobile device and
an application request unit for transmitting the mobile identifier to an application center and instructing the application center to determine an allotted application list and a loaded application list associated with the mobile device based on a mobile identifier and to identify at least one application of the allotted application list which does not form part of the loaded application list, and to transmit the at least one application to the mobile device.

**24.** Chip device of claim 23, wherein the identification unit is adapted to request the mobile identifier from a mobile control unit of the mobile device during an initialization procedure.

**25.** Chip device of at least one of the claims 23 and 24, wherein the application request unit is adapted to receive a request for information on loaded applications, to obtain the information on loaded applications and to transmit the information to the application center.

**26.** Chip device of at least one of the claims 23 to 25, wherein the identification unit is adapted to compare the mobile identifier with a previously stored mobile identifier and to transmit at least one of the mobile identifier and the chip identifier to the application center.

**27.** Chip device of at least one of the claims 23 to 26, wherein the application request unit is adapted to receive the at least one application and to install the at least one application on at least one of a mobile control unit and the chip device.

**28.** Chip device of at least one of the claims 23 to 27, wherein the application request unit is adapted to receive an identifier of the at least one application and to retrieve a corresponding application code.

**29.** Chip device of at least one of the claims 23 to 28, wherein the application request unit is adapted to receive an application code for installation on at least one of a mobile control unit and the chip device.

**30.** Chip device of at least one of the claims 23 to 29, wherein the identification unit is adapted to transmit the mobile identifier to the application center upon detecting at least one of:
- a change of location of the mobile device;
- a handover between serving networks;
- a handover between cells of a serving network; and
- a user request.

**31.** Chip device of at least one of the claims 23 to 30, wherein the identification unit is adapted to receive a capabilities message from a mobile control unit upon a boot process and to analyze the capabilities message to obtain the mobile identifier.
